# EUROPEAN PATENT SPECIFICATION

(11) **EP 4 501 716 B1**
(45) Date of publication and mention of the grant of the patent: **28.01.2026**
(21) Application number: 23189269.6
(22) Date of filing: 02.08.2023
(51) Int. Cl.: B60R 22/46, B60R 22/44

(54) **RETRACTOR FOR A SEATBELT DEVICE**
GURTAUFROLLER FÜR EINE SICHERHEITSGURTEINRICHTUNG
ENROULEUR POUR UN DISPOSITIF DE CEINTURE DE SÉCURITÉ

(43) Date of publication of application: 05.02.2025
(73) Proprietor: Autoliv Development AB, 447 83 Vårgårda (SE)
(72) Inventor: Ramar, Vengatesh, 562 114 Bangalore (IN); Aqeeb, Thouseef, 562 114 Bangalore (IN); Shetty, Rakshith, 562 114 Bangalore (IN); Atwadkar, Abhijeet, 562 114 Bangalore (IN); Shetty, Vijay, 562 114 Bangalore (IN); Swain, Abhijit, 562 114 Bangalore (IN); Langhoff, Hans-Jörg, 25337 Elmshorn (DE); Clute, Günter, 25337 Elmshorn (DE)
(74) Representative: Müller Verweyen

(56) References cited:
- EP-A1- 1 475 282
- DE-A1- 19 927 731
- DE-A1- 3 149 573
- US-A1- 2002 125 360

## Description

The invention relates to a retractor for a seatbelt device comprising the features of the preamble of claim 1.

The object of a retractor in a seatbelt device is to retract a seatbelt in the seatbelt device for restraining an occupant sitting on a seat in a vehicle. Therefore, the retractor is fixed at the vehicle structure via a frame, wherein the frame comprises at least two opposing bearing flanges each having a bearing opening in which a spindle is rotatably mounted on which the seatbelt may be wound on. The spindle is tensioned via a tensioning spring in a retracting direction of the seatbelt, which is mounted with one end at the frame and with the other end at the spindle.

It is further known from the WO 03/ 0 99 619 A2 to provide the retractor with a reversible or irreversible pretensioner which tensions the seatbelt when activated and pulls the slack out of the seatbelt to provide a tight abutment of the seatbelt at the occupant in case of a following accident or to prepare for a possible following accident. As the spindle must be borne rotatably in the frame without being obstructed in the rotational movement by the pretensioner, the pretensioner comprises a driving wheel which is driven by the pretensioner and may be coupled via a clutch with the spindle. Therefore, the driving wheel and the pretensioner are separated during the normal use by the clutch, which is in the open state. If the pretensioner is activated the driving wheel needs to be connected with the spindle in a first step via closing the clutch before the rotational movement of the driving wheel is transferred to the spindle. The clutch comprises two locking pawls which are slidably guided at the driving wheel and perform a movement into a toothing of a tooth ring which is fixed at the spindle when the driving wheel is driven to the rotational movement. The movement of the locking pawls is obliged by a friction ring, which is connected with the locking pawls and abuts at a side wall of the housing, so that the friction ring is braked via friction versus the driving wheel.

From the document DE 10 2020 207 557 B3 it is known another retractor in which the spindle may be driven additionally to the pretensioning function to a haptic warning function. In the haptic warning function, the spindle is driven periodically in the unwinding direction while the spindle is rotated between these periodically rotations in retracting direction via the tensioning spring. The driving wheel is connected with the spindle also in this function via locking pawls to realize the haptic warning function. The locking pawls can be seen in this embodiment also as a clutch which needs to be closed before the rotational movement may be transferred. Because of the periodically driving of the spindle in unwinding direction and the rotation in retracting direction between the rotation in unwinding direction the spindle is alternating rotated in the unwinding direction und in the retracting direction. Therefore, the seatbelt is driven to a considerable shivering movement with rapping the seatbelt at the clothes of the occupant which raises the attention of the occupant. The haptic warning function may be activated in situations in which the attention of the occupant should be increased for example in critical driving situations, in case of default of important driving functions or easily to wake up the occupant after a predetermined time if he use a break for a short sleep. Document US2002/125360A1 discloses a retractor according to the preamble of claim 1.

The suggested solutions have several disadvantages. First of all, the retractors comprise a very complex design with the driving wheel, the tooth ring, the clutch and the locking pawls which results in high costs and an increased installation space. Furthermore, the rotational movement is transferred with a delay to the spindle because of the necessary time and rotational angle of the driving wheel to close the clutch after the activation of the electric drive for the pretensioning function or the haptic warning function. This delay results in a time loss and a reduction of the efficiency in the transfer of the rotation of the driving wheel to the spindle.

In view of this background, it is the object of the invention to provide a retractor with an electric drive to drive the spindle which is more cost efficient, comprises less installation space and enables a transmission of the rotational movement of the electric drive with a higher efficiency and lower time delay to the spindle.

According to the invention it is suggested a retractor comprising the features of claim 1. Further preferred embodiments of the invention may be obtained from the subclaims, the figures and the related description.

According to the basic idea of the invention it is suggested that the electric drive is permanently connected with the spindle.

The advantage of the suggested design can be seen in the very compact structure because there is no clutch arranged between the electric drive and the spindle, which reduces the necessary installation space and the costs for the retractor. Furthermore, the spindle is driven immediately and without any delay upon the activation of the electric drive because of the permanent connection. The electric drive is during the normal use of the retractor deactivated in the power-off mode. Therefore, the moveable parts of the electric drive are driven in this state together with the spindle. When the electric drive is activated, a torque is applied by the electric drive to the spindle which may be used depending on the direction to increase or decrease the retraction force acting on the seatbelt. Therefore, the seatbelt may be wound to the parking position or possible slack may be pulled out of the seatbelt by increasing the retraction force. Also, a haptic warning function may be realized. Furthermore, a comfort function may be realized by reducing the retraction force.

Furthermore, it is suggested that the electric drive comprises a rotationally driven shaft, which extends to the outside, and a coupler is provided, which is directly or indirectly fixed with the shaft and directly or indirectly fixed with the spindle. The suggested design enables a compact design of the retractor with a very easy transmission of the driving movement of the electric drive to the spindle, wherein the coupler provides the connection between the electric drive and the spindle.

The coupler is designed as a circular disc having at one side a coaxially arranged first recess and at the other side a coaxially arranged second recess, wherein the spindle is rotationally fixed in the first recess and the shaft is rotationally fixed in die second recess. The suggested design of the coupler enables a very easy transmission of the driving movement to the spindle because the disc performs also a rotational movement like the spindle which may be transferred 1:1 to the spindle. There is no need for a further deflection or change of the driving movement from the coupler to the spindle.

Furthermore, it is suggested that the electric drive comprises a housing which is fixed at the frame. The frame of the retractor is used therefore not only for bearing the spindle and a fixation at the vehicle structure but additionally to fix the housing covering the electric drive to the outside and to fix the static parts of the electric drive in their positions while the activation of the electric drive.

Furthermore, it is suggested that the housing is designed tube shaped, and a cover is provided, which closes the housing at one side, and an electric motor of the electric drive is fixed at the cover. The housing is designed tube-shaped so that the electric motor may be inserted from one side into the housing. The electric motor is fixed then in a predetermined position with respect to the housing by the cover which is fixed itself at the housing.

Furthermore, it is suggested that a rotational spring is provided, which tensions the spindle in the retracting direction of the seatbelt. The rotational spring tensions the spindle in the retracting direction of the seatbelt, so that the seatbelt is wound up automatically after unbuckling the seatbelt by releasing the tongue from the buckle. The rotational spring applies the basic retraction force to the spindle and thereby to the seatbelt which is added to the retraction force applied by the electric drive.

Furthermore, it is suggested that the rotational spring is fixed directly or indirectly with a first end at the coupler. Therefore, the necessary installation space and the costs may be further reduced by using the coupler additionally to connect the spring with the spindle.

Furthermore, it is suggested that the first recess of the coupler is designed as a tube-shaped projection with a cavity arranged therein, and the tube-shaped projection comprises a non-circular outer geometry on which the rotational spring is fixed with the first end with respect to a rotational movement of the coupler. The first recess is used by the suggested solution additionally to connect the end of the spring without any further means. The non-circular outer geometry provides only because of its shape a force closure and force fitting connection of the first end of the spring with the coupler and thereby indirect with the spindle.

Furthermore, it is suggested that the electric drive is designed as an electric motor with an electric driven rotor, which comprises a mass of less than 0,1 kg.

In the following the invention shall be illustrated on the basis of preferred embodiments with reference to the accompanying drawings, wherein:
- Fig. 1: shows a retractor having an electric drive in the assembled state, and
- Fig. 2: shows the retractor with the electric drive in an exploded view.

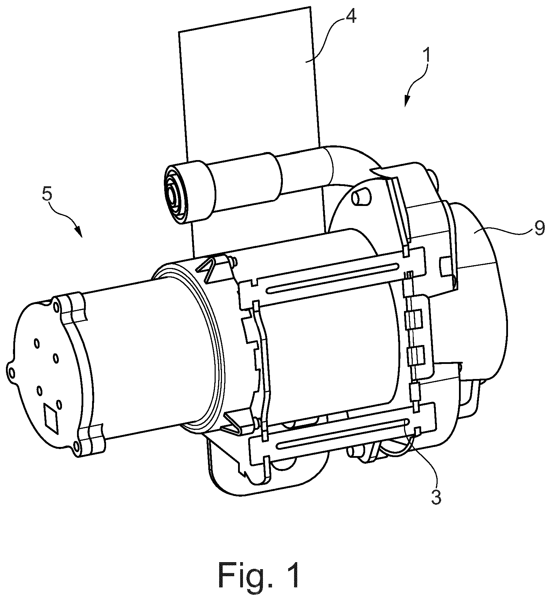

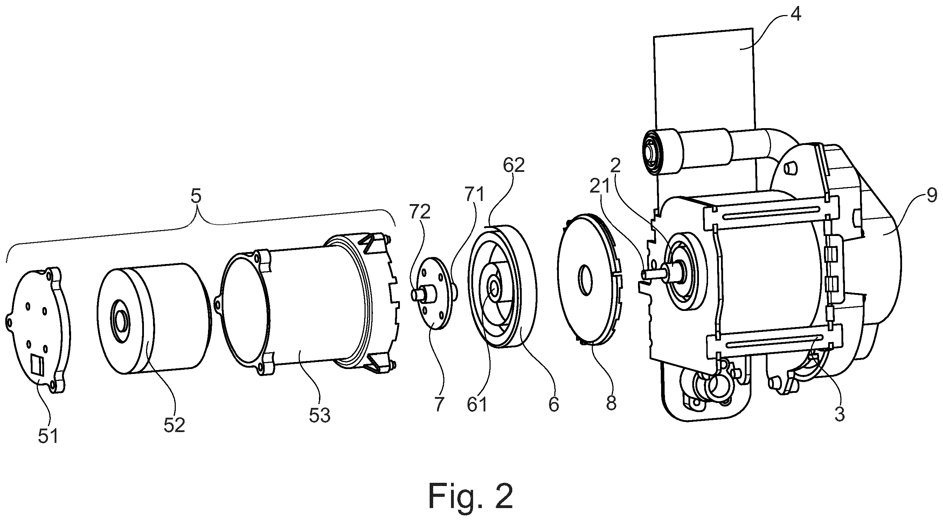

In Fig. 1 it is shown a retractor 1 having a frame 3 and a spindle 2 shown in Fig. 2 with a seatbelt 4 wound up on the spindle 2. The spindle 2 is rotatably mounted in two opposing flanges of the frame 3 like known in the state of the art since long time. The retractor 1 further comprises an irreversible pretensioner 9, which is fixed at the right side of the frame 3 and an electric drive 5 fixed at the left side of the frame 3. The frame 3 itself comprises an attachment projection extending at the down side for a vehicle-fixed fixation of the retractor 1 at a vehicle structure or at a vehicle seat.

The electric drive 5 comprises a tubular housing 53, an electric motor 52 and a cover 51. The electric motor 52 is fixed with its stator part at the cover 51 and is inserted into the free opening of housing 53 which is closed after inserting the electric motor 52 by the cover 51. The cover 51 is fixed at the housing 53 so that the electric motor 52 is fixed also in a predetermined position with respect to the housing 53.

The electric motor 52 comprises further an electric driven rotor having a mass of less than 0,1 kg with a rotatably driven shaft. The shaft is not shown in Fig. 2 and extends towards the spindle 2. Furthermore, a coupler 7 is provided, which is designed as a circular disc with a first recess 71 extending towards the spindle 2 and a second recess 72 extending towards the electric motor 52. The first recess 71 and the second recess 72 each comprise cavities with a non-circular or polygonal cross-section, wherein the shaft of the electric motor 52 is rotationally fixed in the cavity of the second recess 72 and the spindle 2 is rotationally fixed with a projection 21 in the cavity of the first recess 71. Therefore, the coupler 7 forms a permanent rotationally fixed connection of the rotor of the electric motor 52 and with the spindle 2.

Furthermore, a rotational spiral spring 6 is provided which is connected with its first inner end 61 on the outer geometry of the first recess 71 of the coupler 7 and with its outer second end 62 at the housing 53 of the electric drive 5. Between the spindle 2 and the rotational spring 6 is arranged a spring plate 8 which is attached at the outer side of the frame 3 to separate the rotational spring 6 from the spindle 2 and the frame 3. The spring plate 8 provides a sidewise support of the spring 6 to hold the spring 6 in its spiral geometry and to protect the rotational spring 6. The rotational spring 6 tensions the spindle 2 via the coupler 7 and the rotational fixed connection of the projection 21 in the first recess 71 in up-winding direction of the seatbelt 4 in order to up-wind the seatbelt 4 after unbuckling to the parking position.

The electric drive 5 is connected with the electric rotor of the electric motor 52 permanently via the coupler 7 with the spindle 2, so that the electric rotor of the electric motor 52 rotates together with the spindle 2 in the power-off mode during normal use in the pull-out and pull-in direction. The electric rotor is designed with a mass of less than 0,1 kg, so that the inertia forces do not raise the forces to pull-out and pull-in of the seatbelt 4 to an inacceptable level.

The electric drive 5 is activated for example to support the rotational spring 6 for up-winding the seatbelt, to pull-out possible slack out of the seatbelt 4 for a reversible pretensioning or for a haptic warning for example with periodically increasing and/or decreasing the tensioning force in the seatbelt 4. Due to the permanent connection of the electric rotor to the spindle 2 the rotational torque is transmitted without any delay and losses from the electric rotor of the electric motor 52 to the spindle 2. Furthermore, the design is very compact, wherein with the coupler 7 there is only one single additional part for the connection of the electric drive 5 with the spindle 2 needed. The coupler 7 itself needs no own bearing due to the fixed connection with the rotor of the electric drive 5 and the spindle 2.

## Claims

1. Retractor (1) for a seatbelt device comprising:
- a frame (3) for fixing the retractor (1) at a vehicle structure or at a vehicle-fixed seat, and
- a spindle (2) which is rotatably borne in the frame (3), and
- a seatbelt (4), which is wound with one end onto the spindle (2), and
- an electric drive (5) which drives the spindle (2) to a rotational movement when activated, wherein
- the electric drive (5) is permanently connected with the spindle (2), wherein
- the electric drive (5) comprises a rotationally driven shaft, which extends to the outside, and
- a coupler (7) is provided, which is directly or indirectly fixed with the shaft and directly or indirectly fixed with the spindle (2),
**characterized in that**
- the coupler (7) is designed as a circular disc having at one side a coaxially arranged first recess (71) and at the other side a coaxially arranged second recess (72), wherein the spindle (2) is rotationally fixed in the first recess (71) and the shaft is rotationally fixed in the second recess (72).

2. Retractor (1) according to claim 1, **characterized in that**
- the electric drive (5) comprises a housing (53) which is fixed at the frame (3).

3. Retractor (1) according to claim 2, **characterized in that**
- the housing (53) is designed tube shaped, and
- a cover (51) is provided, which closes the housing (53) at one side, and
- an electric motor (52) of the electric drive (5) is fixed at the cover (51).

4. Retractor (1) according to one of the claims 1 to 3, **characterized in that**
- a rotational spring (6) is provided, which tensions the spindle (2) in the retracting direction of the seatbelt (4).

5. Retractor (1) according to claim 1 and according to claim 4, wherein
- the rotational spring (6) is fixed directly or indirectly with a first end (61) at the coupler (7).

6. Retractor (1) according to claim 5, **characterized in that**
- the first recess (71) of the coupler (7) is designed as a tube-shaped projection with a cavity arranged therein, and
- the tube-shaped projection comprises a non-circular outer geometry on which the rotational spring (6) is fixed with the first end (61) with respect to a rotational movement of the coupler (7).

7. Retractor (1) according to one of the claims 1 to 6, **characterized in that**
- the electric drive (5) is designed as an electric motor (52) with an electric driven rotor, which comprises a mass of less than 0,1 kg.

## Patentansprüche

1. Aufroller (1) für eine Sicherheitsgurtvorrichtung, umfassend:
- einen Rahmen (3) zum Befestigen des Aufrollers (1) an einer Fahrzeugstruktur oder an einem fahrzeugbefestigten Sitz und
- eine Spindel (2), die in dem Rahmen (3) rotierbar gelagert ist, und
- einem Sicherheitsgurt (4), der mit einem Ende auf die Spindel (2) aufgewickelt ist, und
- einen elektrischen Antrieb (5), der beim Aktivieren die Spindel (2) zu einer Rotationsbewegung antreibt, wobei
- der elektrische Antrieb (5) mit der Spindel (2) permanent verbunden ist, wobei
- der elektrische Antrieb (5) eine rotatorisch angetriebene Welle umfasst, die sich nach außen erstreckt, und
- ein Koppler (7) bereitgestellt ist, der direkt oder indirekt an der Welle und direkt oder indirekt an der Spindel (2) befestigt ist,
**dadurch gekennzeichnet, dass**
- der Koppler (7) als kreisförmige Scheibe ausgebildet ist, die auf einer Seite eine koaxial angeordnete erste Aussparung (71) und auf der anderen Seite eine koaxial angeordnete zweite Aussparung (72) aufweist, wobei die Spindel (2) in der ersten Aussparung (71) rotatorisch befestigt ist und die Welle in der zweiten Aussparung (72) rotatorisch befestigt ist.

2. Aufroller (1) nach Anspruch 1, **dadurch gekennzeichnet, dass**
- der elektrische Antrieb (5) ein Gehäuse (53) umfasst, das an dem Rahmen (3) befestigt ist.

3. Aufroller (1) nach Anspruch 2, **dadurch gekennzeichnet, dass**
- das Gehäuse (53) rohrförmig ausgelegt ist, und
- ein Deckel (51) bereitgestellt ist, der das Gehäuse (53) auf einer Seite verschließt, und
- ein Elektromotor (52) des Elektroantriebs (5) an der Abdeckung (51) befestigt ist.

4. Aufroller (1) nach einem der Ansprüche 1 bis 3,
**dadurch gekennzeichnet, dass**
- eine Rotationsfeder (6) bereitgestellt ist, die die Spindel (2) in Aufrollrichtung des Sicherheitsgurtes (4) spannt.

5. Aufroller (1) nach Anspruch 1 und nach Anspruch 4, wobei
- die Rotationsfeder (6) mit einem ersten Ende (61) an dem Koppler (7) direkt oder indirekt befestigt ist.

6. Aufroller (1) nach Anspruch 5, **dadurch gekennzeichnet, dass**
- die erste Aussparung (71) des Kopplers (7) als rohrförmiger Vorsprung mit einem darin angeordneten Hohlraum ausgelegt ist, und
- der rohrförmige Vorsprung eine nicht-kreisförmige Außengeometrie aufweist, an der die Rotationsfeder (6) mit dem ersten Ende (61) in Bezug auf eine Rotationsbewegung des Kopplers (7) befestigt ist.

7. Aufroller (1) nach einem der Ansprüche 1 bis 6,
**dadurch gekennzeichnet, dass**
- der elektrische Antrieb (5) als Elektromotor (52) mit einem elektrisch angetriebenen Rotor ausgelegt ist, der eine Masse von weniger als 0,1 kg umfasst.

## Revendications

1. Rétracteur (1) pour un dispositif de ceinture de sécurité comprenant :
- un cadre (3) pour fixer le rétracteur (1) à une structure du véhicule ou à un siège fixé au véhicule, et
- une broche (2) portée en rotation dans le cadre (3), et
- une ceinture de sécurité (4), dont une extrémité est enroulée sur la broche (2), et
- un entraînement électrique (5) qui entraîne la broche (2) dans un mouvement de rotation lorsqu'il est activé, dans lequel
- l'entraînement électrique (5) est relié en permanence à la broche (2), dans lequel
- l'entraînement électrique (5) comprend un arbre entraîné en rotation, qui s'étend vers l'extérieur, et
- un coupleur (7) est prévu, qui est directement ou indirectement fixé à l'arbre et directement ou indirectement fixé à la broche (2),
**caractérisé en ce que**
- le coupleur (7) se présente sous la forme d'un disque circulaire comportant d'un côté un premier évidement (71) disposé coaxialement et de l'autre côté un second évidement (72) disposé coaxialement, dans lequel la broche (2) est fixée en rotation dans le premier évidement (71) et l'arbre est fixé en rotation dans le second évidement (72).

2. Rétracteur (1) selon la revendication 1, **caractérisé en ce que**
- l'entraînement électrique (5) comprend un boîtier (53) qui est fixé au cadre (3).

3. Rétracteur (1) selon la revendication 2, **caractérisé en ce que**
- le boîtier (53) a la forme d'un tube, et
- un couvercle (51) est prévu, qui ferme le boîtier (53) d'un côté, et
- un moteur électrique (52) de l'entraînement électrique (5) est fixé au couvercle (51).

4. Rétracteur (1) selon l'une des revendications 1 à 3, **caractérisé en ce que**
- un ressort de rotation (6) est prévu, qui tend la broche (2) dans le sens de la rétraction de la ceinture de sécurité (4).

5. Rétracteur (1) selon la revendication 1 et selon la revendication 4, dans lequel
- le ressort rotatif (6) est fixé directement ou indirectement par une première extrémité (61) au coupleur (7).

6. Rétracteur (1) selon la revendication 5, **caractérisé en ce que**
- la première cavité (71) du coupleur (7) est conçue comme une saillie en forme de tube dans laquelle est aménagée une cavité, et
- la saillie en forme de tube comprend une géométrie extérieure non circulaire sur laquelle le ressort de rotation (6) est fixé avec la première extrémité (61) par rapport à un mouvement de rotation du coupleur (7).

7. Rétracteur selon l'une des revendications 1 à 6, **caractérisé en ce que**
- l'entraînement électrique (5) est conçu comme un moteur électrique (52) avec un rotor à entraînement électrique, dont la masse est inférieure à 0,1 kg.
